# EUROPEAN PATENT SPECIFICATION

(11) **EP 0 847 890 B1**
(45) Date of publication and mention of the grant of the patent: **14.11.2001**
(21) Application number: 97121590.0
(22) Date of filing: 08.12.1997
(51) Int. Cl.: B60K 37/02

(54) **Control unit integrated in an instrument panel of a vehicle**
Im Armaturenbrett eines Fahrzeuges integrierte Steuereinheit
Ensemble de commande intégré dans le tableau de bord d'un véhicule

(30) Priority: 10.12.1996 IT TO961004
(43) Date of publication of application: 17.06.1998
(73) Proprietor: MAGNETI MARELLI S.p.A., 20145 Milano (IT)
(72) Inventor: Agostini, Roberto, 20090 Trezzano Sul Naviglio (IT); Fallini, Andrea, 20025 Legnano (IT)
(74) Representative: Plebani, Rinaldo

(56) References cited:
- DE-A- 4 227 579
- DE-A- 4 318 011

## Description

The present invention relates to an integrated assembly consisting of an instrument panel and an internal control unit of a vehicle, for example a motor car, in particular where the internal control unit is inserted frontally into the seat formed in the panel. This is applicable in particular where the system for joining together the two manufactured articles involves contact over all or part of the profile. A typical example of this situation exists where, in terms of design, the panel and internal control unit mate perfectly so as to ensure the continuity of their profiles along two or three dimensions (so-called "zero-to-zero" joints).

As is known, the joining operation during assembly of an internal control unit and an instrument panel normally involves, on account of the machining tolerances resulting from the production processes, the existence of play between the respective profiles which, during travel of the vehicle, may give rise to vibrations or squeaking and which, in the case of "zero-to-zero" joints, may cause problems as regards the joining operation itself, which are particularly difficult and costly to solve.

In order to limit these phenomena, it is known to use the system of inserting suitable felt strips between panel and control unit; this solution, however, involves difficulties during the assembly stage and a consequent increase in production costs.

It is also known DE-A-42 27 579 to use, instead of felt strips, lists of plastic material inserted between panel and control unit: said lists are not completely effective in reducing noise and vibration between coupled parts; moreover, this solution does not allow a pleasant appearance of the assembly to be obtained.

The object of the present invention is to provide an integrated assembly consisting of an instrument panel and an internal control unit for a vehicle which is devoid of the drawbacks described above.

In particular it is an object of the invention to provide an integrated assembly consisting of an instrument panel and an internal control unit which is substantially devoid of joining play, so as to avoid relative vibrations between the two parts and squeaking phenomena, resulting in the same time in simple, rapid and low-cost assembly.

It is a further object of the present invention to provide an integrated control unit/panel assembly with which it is possible to obtain an aesthetic appearance which can be varied in a simple and economical manner.

On the basis of the present invention, an integrated assembly consisting of an instrument panel and internal control unit of a vehicle, in particular a motor car, is provided as claimed in claim 1.

In this way the play existing between control unit and panel, and consequently the squeaking and vibration phenomena between the two components, are eliminated; assembly of the control unit is moreover simple and low-cost.

Moreover, the trimming of elastomeric material may be left visible and provided with various external finishes, which are realized in an easy and economical manner by simply varying the surface finishing process.

Further characteristic features and advantages of the present invention will emerge clearly from the description which follows of some non-limiting examples of embodiment thereof, with reference to the figures ,in which:
- Figure 1 is a schematic illustration of an integrated instrument panel/internal control unit assembly constructed in accordance with the invention;
- Figure 2 is a sectional view, along the plane indicated by II-II, of the assembly according to Figure 1;
- Figure 3 is a sectional view, along the plane indicated by III-III, of the assembly according to Figure 1;
- Figure 4 is a sectional view, along the plane indicated by IV-IV, of the assembly according to Figure 1;
- Figure 5 shows a possible first variant of the assembly according to Figure 1;
- Figure 6 shows a possible second variant of the assembly according to Figure 1.

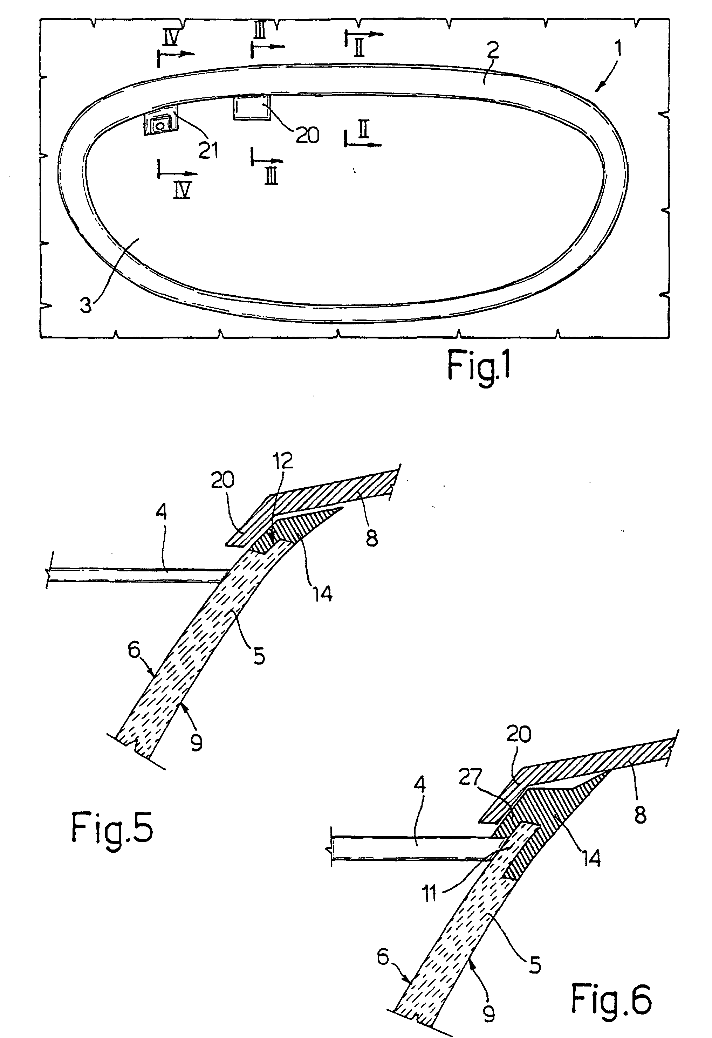

With reference to Figures 1 to 4, 1 denotes an integrated assembly consisting of an instrument panel 2 and an internal control unit 3 of a motor vehicle, not shown.

The instrument panel 2, of the known type, is made of rigid polymeric material and may have any form.

The internal control unit 3, which is substantially known, comprises a main body 4, for example made of rigid polymeric material (not necessarily the same as that with which the panel 2 is made), and a protection pane 5, fixed to the main body 4 in a known manner: inside the main body 4, underneath the pane 5, or on the side of a first face 6 of the latter, the internal instrumentation is housed (not shown in the Figures for the sake of simplicity).

The internal control unit 3 is mounted in a seat 7 formed in the panel 2 and is bounded, at least partially, by a wall 8, which may have any geometrical form.

The pane 5 has peripheral dimensions greater than those of the body 4, so that one of its peripheral edges 11 projects laterally in cantilever fashion from the body 4 itself. The edge 11 is provided, on the side of a second face 9 of the pane 5, opposite to the first face 6, with a seat 12 which in the case in question is continuous and substantially annular and is defined by a step obtained by means of reduction of the cross-section of the pane 5 itself; the seat 12 is designed to receive a connecting edge 13 of an annular trimming 14 made of elastomeric material: the trimming 14 extends moreover projecting from the seat 12 and from the edge 11 so that its two opposite faces 15 and 16 are substantially flush with the faces 9 and 6 of the pane 5.

The connecting edge 13 of the trimming 14 is fixed to the pane 5, inside the seat 12, in a known manner, for example by means of bonding or by means of mechanical mating in the form of joints or fastening systems known and not illustrated for the sake of simplicity; preferably, the trimming 14 is co-moulded onto the pane 5 and the adhesion between the two components is ensured by the chemico-physical compatibility of the materials from which they are made (suitably chosen in accordance with known criteria), if necessary favoured by configuring the edge 11 in the form of suitable mechanical engaging profiles.

The trimming 14 has a profile tapered towards an external edge 17 thereof, opposite to the connecting edge 13. The tapered profile of the trimming 14 has the function of facilitating mounting of the control unit 3 in the seat 6 formed in the panel 2 and favouring mating between the latter and the control unit 3 itself. In particular, the trimming 14 is provided, along its edge 17, with an annular lip 18 having a substantially triangular profile and designed to rest against the wall 8.

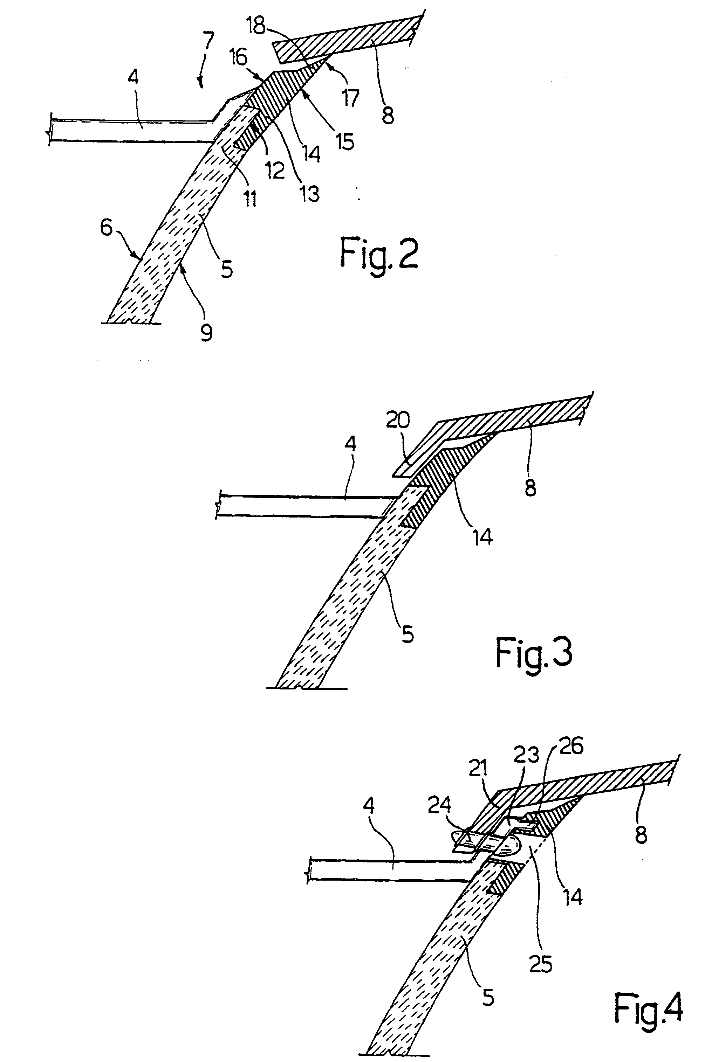

The wall 8 is provided, moreover, along predetermined sections, including those lying in the planes indicated by II-II and III-III in Figure 1, with a plurality of support portions, two of which, indicated by 20 and 21, are shown in Figures 3 and 4: these support portions extend so as to project from the wall 8 towards the main body 4 of the control unit 3 and are designed to receive in a supporting manner, along a predetermined length, the face 6 of the pane 5 and/or the face 16 of the trimming 14.

The system for fastening the control unit 3 and the panel 2, which is substantially of the known type, is provided in the region of some of these support portions, as illustrated for example in Figure 4. Between the face 15 of the trimming 14 and the support portion 21 of the wall 7 of the panel 2 there is arranged a plate 23 connected as one piece to the main body 4; a screw 24 ensures anchoring of the control unit 3 to the panel 2. Opposite the screw 24, the trimming 14 made of elastomeric material has a throughhole 25 which allows insertion of the screw 24 itself.

The plate 23 is moreover provided with an engaging tooth 26 designed to provide a mechanical support for the trimming 14, which covers it entirely, so as to compensate for the weakening due to the presence of the hole 25.

In the integrated assembly 1 described above, therefore, joining between the internal control unit 3 and the instrument panel 2 always occurs along the trimming 14 made of elastomeric material, even in the region of the support portions 20, 21, and not, as in the designs of the known type, directly along the respective profiles of the panel 2 and the control unit 3: in this way the joining play between the two components, due to the rigidity of the materials from which they are made, is offset by the deformability of the elastomeric trimming 14 and substantially eliminated.

The perimetral contact between panel 2 and control unit 3 thus obtained also ensures the elimination of vibrations and squeaking phenomena, owing to the favourable damping characteristics of the elastomeric material from which the trimming 14 is made.

Obviously, the trimming 14 may be made with profiles different from that described above, as illustrated for example in Figures 5 and 6, in which details similar or identical to those already described are indicated by the same numbers.

In particular, according to the variant illustrated in Figure 5, the trimming 14 is without the lip 18 and has a profile which follows substantially, at each point, the corresponding profile of the wall 8, so as to provide a support surface of greater extension. Moreover, the seat 12 of the trimming 14 is provided on the side where the face 9 of the pane is located: in this way the visible extension of the trimming 14 is reduced, at the same time maintaining a large supporting area between the wall 8 and the trimming 14 itself.

In the variant shown in Figure 6, on the other hand, the trimming 14 is provided with a further portion 27 which extends so as to cover the peripheral edge 11 of the pane 5, on the side of its face 6, such that improved fixing of the said trimming 14 to the pane 5 is achieved and the contact area between the bearing portion 20 of the wall 8 and the trimming 14 is increased.

Finally it is obvious that further modifications and variations may be made to the assembly described without departing from the scope of the claims.

## Claims

1. Integrated assembly (1) consisting of an instrument panel (2) and an internal control unit (3) of a vehicle, in particular a motor car, of the type in which said internal control unit (3) comprises a main body (4) which defines a housing for the vehicle instrumentation and a covering pane (5) which closes said housing, said internal control unit (3) being mounted in a seat (7) formed in said instrument panel (2) and being in contact with said seat (7) along respective joining profiles; the assembly comprising joining means (14) arranged between said seat (7) and said internal control unit (3) along said respective joining profiles; the assembly being **characterized in that**:
i) said joining means comprise at least a continuous resilient annular trimming (14) made of an elastomeric material;
ii) said at least one trimming (14) is mounted integrally on said covering pane (5) of the internal control unit (3) along a first of said joining profiles defined by a peripheral edge (11) of said pane (5);
iii) said at least one trimming (14) is connected to said peripheral edge (11) of said pane (5) by means of a connecting edge (13) thereof and extends so as to project from said peripheral edge (11) to mate said seat (7).

2. Assembly according to Claim 1, **characterized in that** a first face (15) of said at least one trimming (14) is substantially flush with a first surface (9) of said pane (5) lying on the opposite side to said main body (4).

3. Assembly according to Claim 2, **characterized in that** said at least one trimming (14) is co-moulded on said covering pane (5) of said control unit (3), along said first joining profile.

4. Assembly according to Claim 2 or 3, **characterized in that** said trimming (14) has a profile tapered towards an end edge (17) thereof opposite to said connecting edge (13).

5. Assembly according to one of Claims 2 to 4, **characterized in that** a second face (16) of said at least one trimming (14), opposite to said first face (15), is arranged substantially flush with a second surface (6) of said covering pane (5), opposite to said first surface (9).

6. Assembly according to Claim 5, **characterized in that** said peripheral edge (11) of said covering pane (5) extends so as to project from said main body (4).

7. Assembly according to Claim 5 or 6, **characterized in that** said panel (2) is provided with support portions (20) designed to cooperate in abutment with said second face (16) of said trimming (14).

8. Assembly according to Claim 6, **characterized in that** said at least one trimming (14) has a portion (27) which extends so as to cover partially said second surface (6) of said covering pane (5).

## Patentansprüche

1. Integrierte Baueinheit (1) aus einem Armaturenbrett (2) und einer inneren Steuereinheit (3) eines Fahrzeugs, insbesondere eines Kraftfahrzeugs, bei welcher die innere Steuereinheit (3) einen ein Gehäuse für die Fahrzeuginstrumentierung bildenden und eine das Gehäuse abschließenden Abdeckscheibe (5) abschließenden Grundkörper (4) aufweist, wobei die innere Steuereinheit (3) in wenigstens einer im Armaturenbrett (2) gebildeten Aufnahme (7) angeordnet ist und mit der Aufnahme (7) über zugeordnete Verbindungsprofile in Kontakt steht, und die Baueinheit zwischen der Aufnahme (7) und der inneren Steuereinheit (3) entlang der zugeordneten Verbindungsprofilierungen angeordnete Verbindungsmittel (14) aufweist,
**dadurch gekennzeichnet,**
i) dass die Verbindungsmittel wenigstens eine ununterbrochen geschlossen umlaufende Einfassung (14) aus einem elastomeren Material aufweisen;
ii) dass die wenigstens eine Einfassung (14) integral an der Abdeckscheibe (5) der inneren Steuereinheit (3) entlang einer ersten der am umlaufenden Rand (11) der Scheibe (5) ausgebildeten Verbindungsprofilierungen angeordnet ist; und
iii) dass die wenigstens eine Einfassung (14) am umlaufenden Rand (11) der Scheibe über einen Befestigungs-Randabschnitt (13) mit der Scheibe (5) verbunden ist und so weit über den umlaufenden Rand (11) vorsteht, dass sie in die Aufnahme (7) eingepasst ist.

2. Baueinheit nach Anspruch 1, **dadurch gekennzeichnet, dass** die erste Flachseite (15) der wenigstens einen Einfassung (14) im Wesentlichen bündig mit einer ersten Flachseite (9) der Scheibe (5) angeordnet ist, welche auf der dem Grundkörper (4) gegenüberliegenden Seite liegt.

3. Baueinheit nach Anspruch 2, **dadurch gekennzeichnet, dass** die wenigstens eine Einfassung (14) mit der Abdeckscheibe (5) der Steuereinheit (3) entlang der ersten Verbindungsprofilierung zusammengespritzt ist.

4. Baueinheit nach Anspruch 2 oder 3, **dadurch gekennzeichnet, dass** die Einfassung (14) ein sich in Richtung auf eine dem Befestigungs-Randabschnitt (13) gegenüberliegende Randkante (17) konisch verjüngendes Profil aufweist.

5. Baueinheit nach einem der Ansprüche 2 bis 4, **dadurch gekennzeichnet, dass** die zweite Flachseite (16) der wenigstens einen Einfassung (14), welche der ersten Flachseite (15) gegenüberliegt, im Wesentlichen bündig mit einer zweiten, der ersten Flachseite (9) gegenüberliegenden Flachseite (6) der Abdeckscheibe (5) angeordnet ist.

6. Baueinheit nach Anspruch 5, **dadurch gekennzeichnet, dass** der umlaufende Rand (11) der Abdeckscheibe (5) eine solche Erstreckung hat, dass er vom Grundkörper (4) vortritt.

7. Baueinheit nach Anspruch 5 oder 6, **dadurch gekennzeichnet, dass** das Armaturenbrett (2) mit Halterungsabschnitten (20) versehen ist, die so ausgestaltet sind, dass sie an der zweiten Flachseite (16) der Einfassung (14) anliegend gehalten sind.

8. Baueinheit nach Anspruch 6, **dadurch gekennzeichnet, dass** die wenigstens eine Einfassung (14) einen Abschnitt (27) aufweist, welcher so ausgebildet ist, dass er die zweite Flachseite (6) der Abdeckscheibe (5) teilweise überdeckt.

## Revendications

1. Ensemble intégré (1) qui est constitué d'un tableau de bord (2) et d'une unité de commande interne (3) d'un véhicule, en particulier une voiture à moteur, du type dans lequel ladite unité de commande interne (3) comprend un corps principal (4) qui définit un logement pour l'instrumentation du véhicule et une glace de couverture (5) qui ferme ledit logement, ladite unité de commande interne (3) étant montée dans un siège (7) formé dans ledit tableau de bord. (2) et étant en contact avec ledit siège (7) le long des profils de raccord respectifs ; l'ensemble comprenant un moyen de raccord (14) disposé entre ledit siège (7) et ladite unité de commande interne (3) le long desdits profils de raccord respectifs ; l'ensemble étant **caractérisé en ce que** :
i) ledit moyen de raccord comprend au moins une bordure annulaire élastique continue (14) constitué d'un matériau d'élastomère ;
ii) ladite au moins une bordure (14) est montée solidairement sur ladite glace de couverture (5) d'une unité de commande interne (3) le long d'un premier profil desdits profils de raccord définis par un bord périphérique (11) de ladite glace (5) ;
iii) ladite au moins une bordure (14) est raccordée audit bord périphérique (11) de ladite glace (5) au moyen d'un bord de connexion (13) de celle-ci et celle-là s'étend de façon à dépasser depuis ledit bord périphérique (11) pour s'adapter dans ledit siège (7).

2. Ensemble selon la revendication 1, **caractérisé en ce qu'**une première face (15) de ladite au moins une bordure (14) est sensiblement à niveau avec une première surface (9) de ladite glace (5) se trouvant sur le côté opposé audit corps principal (4).

3. Ensemble selon la revendication 2, **caractérisé en ce que** ladite au moins une bordure (14) est co-moulée dans ladite glace de couverture (5) de ladite unité de commande (3) le long dudit premier profil de raccord.

4. Ensemble selon la revendication 2 ou 3, **caractérisé en ce que** ladite bordure (14) comporte un profil effilé vers son bord d'extrémité (17) opposé audit bord de connexion (13).

5. Ensemble selon l'une quelconque des revendications 2 à 4, **caractérisé en ce qu'**une seconde face (16) de ladite au moins une bordure (14), opposée à ladite première face (15), est disposée sensiblement à niveau avec une seconde surface (6) de la glace de couverture (5), opposée à ladite première surface (9).

6. Ensemble selon la revendication 5, **caractérisé en ce que** ledit bord périphérique (11) de ladite glace de couverture (5) s'étend de façon à dépasser depuis ledit corps principal (4).

7. Ensemble selon la revendication 5 ou 6, **caractérisé en ce que** ledit tableau de bord (2) est pourvu de parties de support (20) conçues pour coopérer en butée avec ladite seconde face (16) de ladite bordure (14).

8. Ensemble selon la revendication 6, **caractérisé en ce que** ladite au moins une bordure (14) comporte une partie (27) qui s'étend de façon à recouvrir partiellement ladite seconde surface (6) de ladite glace de couverture (5).
